# EUROPEAN PATENT SPECIFICATION

(11) **EP 3 342 283 B1**
(45) Date of publication and mention of the grant of the patent: **27.10.2021**
(21) Application number: 17209248.8
(22) Date of filing: 21.12.2017
(51) Int. Cl.: A01K 63/04, B01D 29/64, B07B 1/52, C05F 7/00, C02F 11/12, F26B 5/14

(54) **FISH FARMING SYSTEM**
FISCHZUCHTSYSTEM
SYSTÈME D'ÉLEVAGE DE POISSONS

(30) Priority: 29.12.2016 SE 1651750
(43) Date of publication of application: 04.07.2018
(73) Proprietor: NP Innovation AB, 213 76 Malmö (SE)
(72) Inventor: PERSSON, Nils-Åke, 211 46 Malmö (SE)
(74) Representative: AWA Sweden AB

(56) References cited:
- US-A- 3 884 811
- US-A- 4 193 206

## Description

### Field of the invention

The present invention relates to a filter intended for fish farming systems.

### Technical Background

There are existing filters used in the fish farming industry. These filters are used to separate fish feed and fish faeces when recirculating water in the system. Typical examples used are disc filters and drum filters.

The present invention is directed to a filter and a filter system intended for a fish farming system. One aim of the present invention is to provide a filter which improves the separation of fish feed and fish faeces in the recirculating water directed from a fish tank(s) and through a filter and treatment system and then back to the fish tank again.

### Summary of the invention

The stated purpose above is achieved by a fish farming system according to claim 1 and a method for separation of a sludge/ solids fraction of a water flow in such a fish farming system according to claim 7. Preferred embodiments are disclosed in dependent claims.

The present invention is especially directed to a filter intended for separation of a sludge/solids fraction of a water flow, wherein the filter comprises a sludge/solids filtering unit and a sludge/solids removing unit, and wherein the filter is a pre-filter positioned as a first filter in a filter system in a fish farming system, wherein the pre filter comprises a sludge/solids filtering unit in the form of a screen, and wherein the sludge removing unit is one or more scrapers removing sludge/solids from the surface of the pre filter.

There are various solutions containing filters for fish farming systems, however these solutions lack having a pre-filter and/or a sludge/solids removing unit that is able to remove sludge/solids from the pre-filter. For instance, US4043299 discloses a fish rearing system where water is recycled from a fish rearing tank to a primary filter.

Further, US5963831 discloses an automated aquaculture system which comprises one or more culture tanks connected to a closed system of filters and ultraviolet or ozone sources for water purification prior to returning water to the culture tanks.
US 3 884 811 A discloses a fish farming system comprising a pre-filter comprising a sludge/solids filtering unit and a sludge/solids removing unit, wherein the sludge/solids filtering unit is in the form of a screen, wherein the sludge removing unit is one or more scrapers removing sludge/solids from the surface of the pre-filter, wherein the pre-filter is installed vertically to an inlet flow, where a reference of 90 degrees implies totally perpendicular to the inlet flow, said fish farming system also comprising a subsequent second filter intended to filter the liquid phase in a second filtration, wherein the subsequent second filter (36) is a bed of filter material, preferably charcoal, contained in an open-topped housing.US 3 884 811 A further discloses a method for separation of a sludge/solids fraction of a water flow in such a fish farming system, said method comprising directing an outlet water flow from one or more fish tanks to the pre-filter; and filtering the liquid phase out from the pre-filter in the subsequent second filter.

As notable from above, the filter according to the present invention functions as a pre-filter in a filter system intended for the fish farming industry. Furthermore, the pre-filter comprises a filter unit which separates sludge and solids from the water flow, and also a removing unit which enables to remove sludge and solids from the pre-filter.

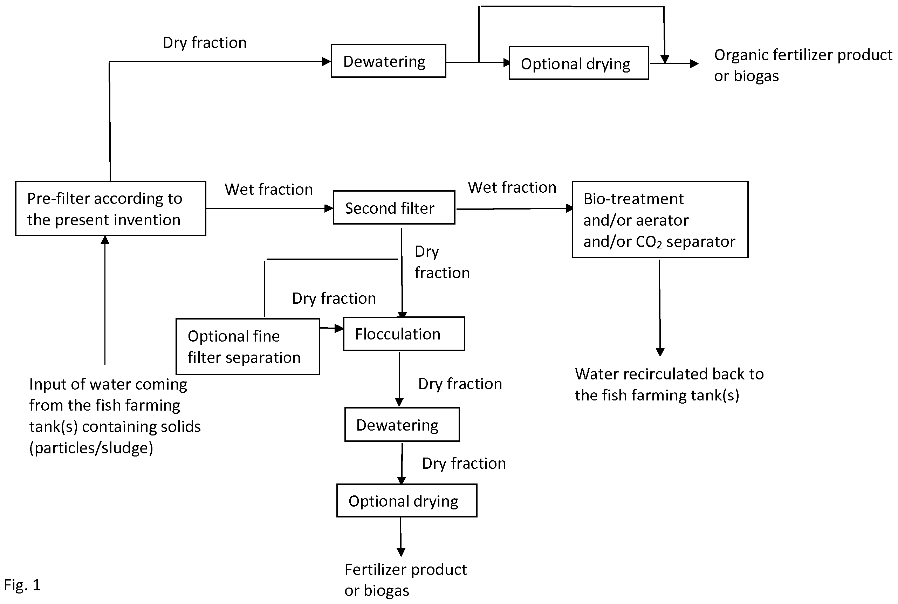

The pre-filter according to the present invention is intended to separate larger contaminants and particles in a fast and moderate way. The contaminants consist of fish faeces and residues of fish feed pellets which have not been caught by the fish and which have settled to the bottom of the fish farming tanks, possibly also together with a complementary stream from an upper level of the fish farming tanks. The contaminants are loosely held in the water stream and transported to the pre-filter according to the present invention. The pre-filter then separates that stream into one, relatively speaking, dry stream comprising most of the solids and one wet inlet flow to a second filter. This is further discussed below and shown in the flow scheme in fig. 1.

One great advantage of the pre-filter according to the present invention is the gentle treatment to the particles and dry matter when these are separated off from the aqueous stream. The particles are smoothly separated to avoid the particles from being destroyed into smaller ones or even worse going into solution. Therefore, the separation degree of dry matter can be held at a very high level.

Another very important aspect according to the present invention is the fact that the fast and gentle separation of the solid particles clearly visualizes the amount of fish feed pellets being lost in the fish farming system. This is of great importance in relation to the total economy of the fish farming system and is a key factor in the process to minimize the sludge amount going out from the fish farming system.

The above disclosed features are clear differences when comparing a fish farming system comprising a pre-filter according to the present invention with existing filter systems having no pre-filters. Normally the existing systems are flushing the solids/sludge out from the system together with the filter rinsing water in a low degree of dry matter and in a closed water pipe system where the solids normally are not visualized.

### Brief description of the drawings

Fig. 1 shows a flow scheme of a system according to one embodiment of the present invention. This is further explained below.

### Specific embodiments of the invention

Below, specific embodiments of the present invention are disclosed and discussed in more detail.

As mentioned, according to one specific embodiment of the present invention, the pre-filter comprises a sludge/solids filtering unit in the form of a screen. The screen enables a very gentle separation of sludge (particles and other solid matter) from the aqueous flow as the dry matter is not exposed to any strong exercising forces. Furthermore, the screen may be placed with the screen openings vertically in accordance with the inlet flow. Moreover, according to one embodiment of the present invention the screen has screen openings in a size ranging from 0.5 mm up to 1.5 mm. Furthermore, the pre-filter is installed vertically to the inlet flow but with an angle, such as in 50 - 80 degrees. According to one specific embodiment, the pre-filter is installed in an angle of 55 - 65 degrees, such as 60 degrees.

According to the present invention, the sludge removing unit is a scraper removing sludge/solids from the surface of the pre-filter. According to one embodiment of the present invention, the scraper is driven by a vertically rotating chain (belt). Furthermore, the scrapers are then fixed to and driven by the rotating chain parallel to the filter surface along the filter openings over the filter surface.

The scrapers may comprise rubber or a brush material. In some cases there may be of interest to have several scrapers, of which one comprises a rubber list and another one a brush design. In such cases, then the rubber scraper is arranged to first bring along all the sludge and solids, and then the brush scraper deep cleans the screen.

The scraps leave the sludge and solids at a connecting sludge transporting unit. This sludge and solids transporting unit may be of a channel design, but also a belt and a screw are possible. Furthermore, according to yet another specific embodiment of the present invention, the filter unit also comprises a tilting wiper separating sludge from the scraper and into a sludge transporting unit. The tilting wiper(s) functions as a scraper(s) removing sludge from the filter scraper(s) and into the common pre-filter sludge transporting unit.

The tilting wiper is arranged so that it scrapes off sludge and solids which have adhered to the filter scraps. The sludge and solids adhered to the scraper(s) are then also separated off and collected in the solids transporting unit.

The tilting wiper is arranged so that it is turned upwards at the same time as it cleans the filter scraps moving upwards. When the tilting wiper then releases the contact with the filter scraper, then, on its way back, it falls back freely to its original position and meets an anvil. The immediate stop created by meeting the anvil enables the sludge and solids to be released from the tilting wiper. As such, all or most of the adhered sludge and solids on the scrapers fall into the sludge transporting unit.

The pre-filter screen according to the present invention is also simple to unplug from the system for maintenance and cleaning etc.

The present disclosure also provides a dewatering unit intended for dewatering the sludge/solids fraction. It should be noted that a fish farming system according to the present invention may comprise several pre-filters, such as a multiple filter station.

As notable in fig. 1, the dry fraction separated off in the pre-filter is transported by the sludge and solids transporting unit pure mechanically in a dry matter to the dewatering unit. The dewater unit may consist of a press, such as a belt press, filter press or screw press. In the dewatering unit the dry matter level of solids and sludge fraction is increased, i.e. water is separated off. The produced matter is a dry product with a high nutrition level per weight unit. As such, the product exhibits a low volume to be handled as an organic sludge or which may be further dried (see fig. 1) with a comparatively low energy input to produce an organic powder or granulated fertilizer.

The transportation of sludge from the sludge and solids transporting unit to a dewatering unit may be performed by a membrane pump, a screw or another suitable pump, e.g. a mono-pump. If a screw and scrape press is used as the dewatering unit, this may be provided with a rubber disc on the outermost parts of the screw and scrape blades, which rubber disc is intended to scrape the sieve/filter surface so that the surface is not clogged by sludge during the press dewatering.

As may be understood from above, according to one specific embodiment of the present invention, the dewatering unit functions purely mechanical.

The combination of a pre-filter and then a mechanical dewatering unit is also one important aspect according to the present invention. This combination presents a clear advantage when compared to the existing alternatives today. The pre-filter of the present invention enables the particles to be smoothly separated to avoid the particles from being destroyed into smaller ones or even worse going into solution. This further implies that the particles and solid matter may then be dewatered without using any additives, such as flocculating agents etc., or fine filtrating units in subsequent filter systems. Moreover, the separation degree of dry matter can be held at a very high level.

Another very important aspect according to the present invention is the fact that the fast and gentle separation of the solid particles clearly visualizes the amount of fish feed pellets being lost in the fish farming system. This is of great importance in relation to the total economy of the fish farming system and is a key factor in the process to minimize the sludge amount going out from the fish farming system.

The above disclosed features are clear differences when comparing a fish farming system comprising a pre-filter according to the present invention with existing filter systems having no pre-filters. As mentioned, normally the today existing systems are flushing the solids/sludge out from the system together with the filter rinsing water in a low degree of dry matter and in a closed water pipe system where the solids normally are not visualized.

Based on the above, the present invention is also directed to a method for separation of a sludge/solids fraction of a water flow in a fish farming system, said method comprising directing an outlet water flow from one or more fish tanks to a pre-filter according to the present invention; and separating off a sludge/solids fraction and directing this fraction to a dewatering unit. As mentioned above, it is preferred that the dewatering unit works purely mechanical and without the need of chemical additives. Furthermore, according to one specific embodiment, the dewatering unit is a press. Different possible alternatives of presses are mentioned above.

According to yet another specific embodiment of the invention, the present invention is directed to a filter system intended for fish farming, said filter system comprising a pre-filter according to above and a subsequent second filter intended to filter the liquid phase in a second filtration. This system comprising two levels of filters of different type increases the efficiency of a fish farming system substantially. Moreover, the second filter type incorporated in a fish farming system according to the present invention may be of different type, and suitable examples are disc filters and/or drum filters. It should be noted that such filters are more suitable when the size of the particles/solids is lower and when the dry matter level of the aqueous flow is lower than in the flow input to the pre-filter(s) according to the present invention. This is also one great benefit of the pre-filter according to the present invention. The pre-filter is intended to separate a flow having comparatively higher level of dry matter. Furthermore, the pre-filter separates off the particles/solid matter from the aqueous stream in a very gentle way. This is not the case if a regular filter type is used as the first filter type. For instance, a drum filter or disc filter is intended for water flows with smaller particles and less level of dry matter per weight unit.

Furthermore, it should be noted that a fish farming system according to the present invention may comprise several pre-filters, such as in a modular station system, and several second type filters, e.g. drum filters and/or disc filters.

Moreover, according to yet another specific embodiment, the present invention refers to a fish farming system comprising a filter system according to the present invention, and a dewatering unit intended to dewater a dry fraction from the second filter. Such a system is shown in fig. 1. In such a case there is arranged dewatering units subsequent to both the pre-filter (dry fraction) and the second filter (dry fraction).

### Detailed description of the drawings

Fig. 1 shows a flow scheme of a system according to one embodiment of the present invention. As notable, the contaminated sludge/solids water flowed from the fish farming system is sent to a first filter, a so called pre-filter. The pre-filter separates the flow into one dry fraction and one wet fraction. The dry fraction is flowed to a dewatering unit. The water obtained in the dewatering unit may be sent to a common wet stream somewhere in the system. The dry fraction obtained from the dewatering unit may either be treated as a final product / sludge to be handled or may be dried further to an organic fertilizer product.

Furthermore, the wet fraction obtained in the pre-filter is fed to a second filter type, such as a disc or drum filter. In this filter there is also obtained two different fractions. The dry fraction is dewatered in a similar way as above, however in this case a flocculation unit may also be needed to separate off the final dry matter. It should be noted that such flocculation unit is totally optional according to the present invention. It should also be noted that a common dewatering system may be used for the dry fraction obtained from the second filter type as well as dry fraction obtained from the pre-filter unit according to the present invention.

The wet fraction is flowed to subsequent treatments before being sent back as the fish farming tanks. Such treatments involve carbon dioxide separation, but before or subsequent to that, also a bio bed may be used to treat the wet fraction. These steps are used to further process the water stream in the right way to be purified before sent back to the fish farming tank(s). Moreover, several wet streams obtained in several steps may be sent to a common wet stream in the system, but this is not necessary for all streams.

## Claims

1. A fish farming system comprising a pre-filter comprising a sludge/solids filtering unit and a sludge/solids removing unit, wherein the sludge/solids filtering unit is in the form of a screen, wherein the sludge removing unit is one or more scrapers removing sludge/solids from the surface of the pre-filter, wherein the pre-filter is installed vertically to an inlet flow but with an angle in the range of 50 - 80 degrees, where a reference of 90 degrees implies totally perpendicular to the inlet flow,
said fish farming system also comprising
a subsequent second filter intended to filter the liquid phase in a second filtration, wherein the subsequent second filter is a disc filter or a drum filter.

2. The fish farming according to claim 1, also comprising a dewatering unit intended for dewatering the sludge/solids fraction.

3. The fish farming system according to claim 1 or 2, wherein the dewatering unit functions purely mechanical.

4. The fish farming system according to claim 1 or 2, wherein the dewatering unit is a press.

5. The fish farming system according to any of claims 1-4, wherein the one or more scrapers is driven by a vertically rotating belt.

6. The fish farming system according to any of claims 1-5, wherein the filter unit also comprises a tilting wiper arranged for separating sludge from the one or more scrapers and into a sludge transporting unit.

7. A method for separation of a sludge/solids fraction of a water flow in a fish farming system according to any of claims 1-6, said method comprising:
- directing an outlet water flow from one or more fish tanks to the pre-filter; and
- filtering the liquid phase out from the pre-filter in the subsequent second filter.

8. The method according to claim 7, wherein the method also comprises separating off a sludge/solids fraction and directing this fraction to a dewatering unit.

9. The method according to claim 8, wherein the dewatering unit works purely mechanical and without chemical additives.

## Patentansprüche

1. Fischzuchtsystem, einen Vorfilter umfassend, der eine Schlamm-/Feststofffiltereinheit und eine Schlamm-/Feststoffentfernungseinheit umfasst, wobei die Schlamm-/Feststofffiltereinheit von der Gestalt eines Siebs ist, wobei die Schlammentfernungseinheit ein oder mehrere Abstreifer ist, die Schlamm/Feststoffe von der Oberfläche des Vorfilters entfernen, wobei der Vorfilter vertikal zu einem Einlassstrom, jedoch mit einem Winkel in dem Bereich von 50 bis 80 Grad installiert ist, wobei eine Referenz von 90 Grad vollständig senkrecht zu dem Einlassstrom impliziert,
wobei das Fischzuchtsystem auch einen nachfolgenden zweiten Filter umfasst, der vorgesehen ist, um die Flüssigphase in einer zweiten Filtration zu filtrieren, wobei der nachfolgende zweite Filter ein Scheibenfilter oder ein Trommelfilter ist.

2. Fischzucht nach Anspruch 1, außerdem eine Entwässerungseinheit umfassend, die zur Entwässerung der Schlamm-/Feststofffraktion vorgesehen ist.

3. Fischzuchtsystem nach Anspruch 1 oder 2, wobei die Entwässerungseinheit rein mechanisch funktioniert.

4. Fischzuchtsystem nach Anspruch 1 oder 2, wobei die Entwässerungseinheit eine Presse ist.

5. Fischzuchtsystem nach einem der Ansprüche 1 bis 4, wobei der eine oder die mehreren Abstreifer durch einen vertikal rotierenden Riemen angetrieben werden.

6. Fischzuchtsystem nach einem der Ansprüche 1 bis 5, wobei die Filtereinheit auch einen Schwenkwischer umfasst, der zum Trennen von Schlamm von dem einen oder den mehreren Abstreifern und in eine Schlammtransporteinheit angeordnet ist.

7. Verfahren zur Trennung einer Schlamm-/Feststofffraktion eines Wasserstroms in einem Fischzuchtsystem nach einem der Ansprüche 1 bis 6, das Verfahren Folgendes umfassend:
- Führen eines Auslasswasserstroms aus einem oder mehreren Fischbecken zu dem Vorfilter; und
- Filtrieren der Flüssigphase aus dem Vorfilter in dem nachfolgenden zweiten Filter.

8. Verfahren nach Anspruch 7, wobei das Verfahren außerdem Abtrennen einer Schlamm-/Feststofffraktion und Führen dieser Fraktion zu einer Entwässerungseinheit umfasst.

9. Verfahren nach Anspruch 8, wobei die Entwässerungseinheit rein mechanisch und ohne chemische Zusatzstoffe arbeitet.

## Revendications

1. Système de pisciculture comprenant un préfiltre comprenant une unité de filtration de boues/matières solides et une unité d'élimination de boues/matières solides, dans lequel l'unité de filtration de boues/matières solides a la forme d'un tamis, dans lequel l'unité d'élimination de boues est un ou plusieurs grattoirs éliminant les boues/matières solides de la surface du préfiltre, dans lequel le préfiltre est installé verticalement à un flux d'admission, mais selon un angle dans la plage de 50 à 80 degrés, où une référence de 90 degrés implique une perpendicularité totale au flux d'admission,
ledit système de pisciculture comprenant également un second filtre suivant destiné à filtrer la phase liquide dans une seconde filtration, le second filtre suivant étant un disque filtrant ou un tambour filtrant.

2. Système de pisciculture selon la revendication 1, comprenant également une unité d'assèchement destinée à assécher la fraction de boues/matières solides.

3. Système de pisciculture selon la revendication 1 ou 2, dans lequel l'unité d'assèchement fonctionne de manière purement mécanique.

4. Système de pisciculture selon la revendication 1 ou 2, dans lequel l'unité d'assèchement est une presse.

5. Système de pisciculture selon l'une quelconque des revendications 1 à 4, dans lequel le ou les grattoirs sont entraînés par une courroie tournant verticalement.

6. Système de pisciculture selon l'une quelconque des revendications 1 à 5, dans lequel l'unité filtrante comprend également un racloir incliné conçu pour séparer les boues du ou des grattoirs et vers une unité de transport de boues.

7. Procédé de séparation d'une fraction de boues/matières solides d'un flux d'eau dans un système de pisciculture selon l'une quelconque des revendications 1 à 6, ledit procédé comprenant :
- l'orientation d'un flux d'eau d'évacuation depuis un ou plusieurs bassins à poissons vers le préfiltre ; et
- la filtration de la phase liquide hors du préfiltre dans le second filtre suivant.

8. Procédé selon la revendication 7, dans lequel le procédé comprend également
le détachement d'une fraction de boues/matières solides et l'orientation de cette fraction vers une unité d'assèchement.

9. Procédé selon la revendication 8, dans lequel l'unité d'assèchement fonctionne de manière purement mécanique et sans additifs chimiques.
